# EUROPEAN PATENT APPLICATION

(11) **EP 4 518 486 A1**
(43) Date of publication of application: **05.03.2025**
(21) Application number: 22942040.1
(22) Date of filing: 18.05.2022
(51) Int. Cl.: H04W 72/04, H04W 8/20, H04W 24/10, H04W 60/00

(54) **WIRELESS COMMUNICATION METHOD, USER EQUIPMENT, AND NETWORK DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Novagraaf Technologies
(86) International application number: PCT/CN2022/093691
(87) International publication number: WO 2023/220998

(57) **Abstract**

Provided are a wireless communication method, a user equipment, and a network device. Various aspects involved in the present application are described below. The method comprises: a user equipment (UE) sends first information to a network device, the first information indicating whether the UE supports a first capability, and the first capability comprising one or more of the following: receiving a UE policy rule corresponding to a non-HPLMN; and receiving UE policy rules corresponding to a plurality of PLMNs. In embodiments of the present application, a UE indicates, by sending first information to a network device, whether the UE supports a first capability, so that the network device can configure a UE policy rule for the UE on the basis of the first information, thereby preventing the case that when a network device directly configures, for a UE, a UE policy rule applicable to a non-PLMN, the UE reports an error and is unable to use the UE policy rule.

## Description

### TECHNICAL FIELD

Embodiments of the present disclosure relate to the field of communication technologies, and in particular, relate to a method for wireless communication, a user equipment, and a network device.

### BACKGROUND

To indicate user equipment (UE) policy rules applicable in different public land mobile networks (PLMN), a network device indicates the PLMN IDs corresponding to different UE policy rules when configuring UE policy rules for the UE. However, some legacy UEs (e.g., UEs supporting R17 or earlier protocols) may only support the configuration of UE policy rules with the home PLMN (HPLMN). In other words, the UE will not report an error in the case that the UE policy rule only includes the PLMN ID of the local PLMN. The UE will report an error in the case that the UE policy rule includes PLMN IDs of other PLMNs (e.g., visited PLMNs) besides the local PLMN. Therefore, if UE policy rules with PLMN IDs of other PLMNs are directly delivered, such UEs may no longer be able to use the UE policy rules.

### SUMMARY

The present disclosure provides a method for wireless communication, a user equipment (UE), and a network device. Various aspects related to the present disclosure are described below.

In a first aspect, a method for wireless communication is provided. The method includes: transmitting, by a UE, first information to a network device, wherein the first information indicates whether the UE supports a first capability, and the first capability includes at least one of the following items: receiving a UE policy rule corresponding to a non-home public land mobile network (HPLMN); or receiving UE policy rules corresponding to a plurality of public land mobile networks (PLMNs).

In a second aspect, a method for wireless communication is provided. The method includes: receiving, by a UE, a first indication from a network device, wherein the first indication indicates a corresponding relationship between one or more PLMN identifiers (PLMN IDs) and one or more UE policy rules.

In a third aspect, a method for wireless communication is provided. The method includes: determining, by a UE, a matched first UE route selection policy (URSP) rule, wherein the first URSP rule includes a first route selection descriptor (RSD), a PLMN corresponding to the first RSD includes an equivalent PLMN of a registered PLMN of the UE, and a first packet data unit (PDU) session is established between the UE and a network device using the first RSD; and determining, by the UE, whether to use the first PDU session.

In a fourth aspect, a method for wireless communication is provided. The method includes: determining, by a UE, a matched first URSP rule, wherein the first URSP rule includes an RSD corresponding to a registered PLMN of the UE and an RSD corresponding to an equivalent PLMN of the registered PLMN; and establishing, by the UE, a PDU session with a network device by using the RSD corresponding to the equivalent PLMN in a case that the PDU session fails to be established by using the RSD corresponding to the registered PLMN.

In a fifth aspect, a method for wireless communication is provided. The method includes: receiving, by a network device, first information from a UE, wherein the first information indicates whether the UE supports a first capability, and the first capability includes at least one of the following items: receiving a UE policy rule corresponding to a non-HPLMN; or receiving UE policy rules corresponding to a plurality of PLMNs.

In a sixth aspect, a method for wireless communication is provided. The method includes: transmitting, by a network device, a first indication to a UE, wherein the first indication indicates a corresponding relationship between one or more PLMN IDs and one or more UE policy rules.

In a seventh aspect, a method for wireless communication is provided. The method includes: determining, by a network device, whether to use the first PDU session, wherein the first PDU session is established using a first RSD, a PLMN corresponding to the first RSD includes an equivalent PLMN of a registered PLMN of the UE, and the first RSD belongs to a matched first URSP rule.

In an eighth aspect, a method for wireless communication is provided. The method includes: establishing, by a network device, a PDU session with a UE by using an RSD corresponding to an equivalent PLMN in a case that the PDU session fails to be established by using an RSD corresponding to a registered PLMN of the UE, wherein the RSD corresponding to the registered PLMN and the RSD corresponding to the equivalent PLMN belong to a matched first URSP rule, and the equivalent PLMN is an equivalent PLMN of the registered PLMN.

In a ninth aspect, a UE is provided. The UE includes a transmission unit, configured to transmit first information to a network device, wherein the first information indicates whether the UE supports a first capability, and the first capability includes at least one of the following items: receiving a UE policy rule corresponding to a non-home public land mobile network (HPLMN); or receiving UE policy rules corresponding to a plurality of PLMNs.

In a tenth aspect, a UE is provided. The UE includes a reception unit, configured to receive a first indication from a network device, wherein the first indication indicates a corresponding relationship between one or more PLMN IDs and one or more UE policy rules.

In an eleventh aspect, a UE is provided. The UE includes a processing unit, configured to determine a matched first URSP rule, wherein the first URSP rule includes a first RSD, a PLMN corresponding to the first RSD includes an equivalent PLMN of a registered PLMN of the UE, and a first PDU session is established between the UE and a network device using the first RSD; and wherein the processing unit is further configured to determine whether to use the first PDU session.

In a twelfth aspect, a UE is provided. The UE includes a processing unit, configured to determine a matched first URSP rule, wherein the first URSP rule includes an RSD corresponding to a registered PLMN of the UE and an RSD corresponding to an equivalent PLMN of the registered PLMN; and wherein the processing unit is configured to establish a PDU session with a network device by using the RSD corresponding to the equivalent PLMN in a case that a PDU session fails to be established by using the RSD corresponding to the registered PLMN.

In a thirteenth aspect, a network device is provided. The network device includes a reception unit, configured to receive first information from a UE, wherein the first information indicates whether the UE supports a first capability, and the first capability includes at least one of: receiving a UE policy rule corresponding to a non-home public land mobile network (HPLMN); or receiving UE policy rules corresponding to a plurality of PLMNs.

In a fourteenth aspect, a network device is provided. The network device includes a transmission unit, configured to transmit a first indication to a UE, wherein the first indication indicates a corresponding relationship between one or more PLMN IDs and one or more UE policy rules.

In a fifteenth aspect, a network device is provided. The network device includes a processing unit, configured to determine whether to use the first PDU session, wherein the first PDU session is established by using a first RSD, a PLMN corresponding to the first RSD includes an equivalent PLMN of a registered PLMN of the UE, and the first RSD belongs to a matched first URSP rule.

In a sixteenth aspect, a network device is provided. The network device includes:

a processing unit, configured to establish a PDU session with a UE by using an RSD corresponding to an equivalent PLMN in a case that a PDU session fails to be established by using an RSD corresponding to a registered PLMN of the UE,

wherein the RSD corresponding to the registered PLMN and the RSD corresponding to the equivalent PLMN belong to a matched first URSP rule, and the equivalent PLMN is an equivalent PLMN of the registered PLMN.

In a seventeenth aspect, a UE is provided. The UE includes a processor, a memory, and a communication interface, wherein the memory is configured to store one or more computer programs, and the processor, when loading and running the one or more computer programs stored in the memory, causes the UE to perform some or all of the steps of the methods described above.

In an eighteenth aspect, a network device is provided. The network device includes a processor, a memory, and a communication interface, wherein the memory is configured to store one or more computer programs, and the processor, when loading and running the one or more computer programs stored in the memory, causes the network device to perform some or all of the steps of the methods in the above aspects.

In a nineteenth aspect, a communication system is provided according to the embodiments of the present disclosure. The communication system includes the terminal and/or the network device described above. In some embodiments, the communication system further includes other devices that interact with the terminal or the network device in the solutions provided by the embodiments of the present disclosure.

In a twentieth aspect, a computer-readable storage medium is provided according to the embodiments of the present disclosure. The computer-readable storage medium stores one or more computer programs, wherein the one or more computer programs, when loaded and run by a terminal, cause the terminal to perform some or all of the steps of the methods in the above aspects.

In a twenty-first aspect, a computer program product is provided according to the embodiments of the present disclosure. The computer program product includes a non-transitory computer-readable storage medium storing one or more computer programs, wherein the one or more computer programs, when loaded and run by a terminal, cause the terminal to perform some or all of the steps of the methods in the above aspects. In some embodiments, the computer program product is a software installation package.

In a twenty-second aspect, a chip is provided according to the embodiments of the present disclosure. The chip includes a memory and a processor, wherein the processor, when loading and running one or more computer programs from the memory, is caused to perform some or all of the steps described in the methods of the above aspects.

In the embodiments of the present disclosure, the UE transmits the first information to the network device to indicate whether the UE supports the first capability, enabling the network device to configure a UE policy rule for the UE based on the first information, which avoids the situation where the network device directly configures a UE policy rule that is not applicable to the PLMN for the UE, resulting in the UE reporting an error and being unable to use the UE policy rule.

### BRIEF DESCRIPTION OF THE DRAWINGS

FIG. 1 is a schematic diagram of a wireless communication system applied in some embodiments of the present disclosure;
FIG. 2 is a flowchart showing a UE policy configuration process applicable to some embodiments of the present disclosure;
FIG. 3 is a flowchart showing a method for a UE to bind a PDU session for application data applicable to some embodiments of the present disclosure;
FIG. 4 illustrates a process of establishing a PDU session applicable to some embodiments of the present disclosure;
FIG. 5 is a schematic flowchart showing a method for wireless communication according to some embodiments of the present disclosure;
FIG. 6 is a schematic flowchart showing a method for wireless communication according to some embodiments of the present disclosure;
FIG. 7 is a schematic flowchart showing a method for wireless communication according to some embodiments of the present disclosure;
FIG. 8 is a schematic flowchart showing a method for wireless communication according to some embodiments of the present disclosure;
FIG. 9 is a schematic flowchart showing a method for wireless communication according to some embodiments of the present disclosure;
FIG. 10 is a schematic diagram of a method for wireless communication according to some embodiments of the present disclosure;
FIG. 11 is a schematic diagram of a user equipment according to some embodiments of the present disclosure;
FIG. 12 is a schematic diagram of a user equipment according to some embodiments of the present disclosure;
FIG. 13 is a schematic diagram of a user equipment according to some embodiments of the present disclosure;
FIG. 14 is a schematic diagram of a network device according to some embodiments of the present disclosure.
FIG. 15 is a schematic diagram of a network device according to some embodiments of the present disclosure;
FIG. 16 is a schematic diagram of a network device according to some embodiments of the present disclosure; and
FIG. 17 is a schematic structural diagram of a communication apparatus according to some embodiments of the present disclosure.

### DETAILED DESCRIPTION

The technical solutions of the present disclosure will be described below in conjunction with the accompanying drawings. To facilitate understanding of the present disclosure, the architecture applicable to the embodiments of the present disclosure, the involved communication process, and the terminology are introduced first.

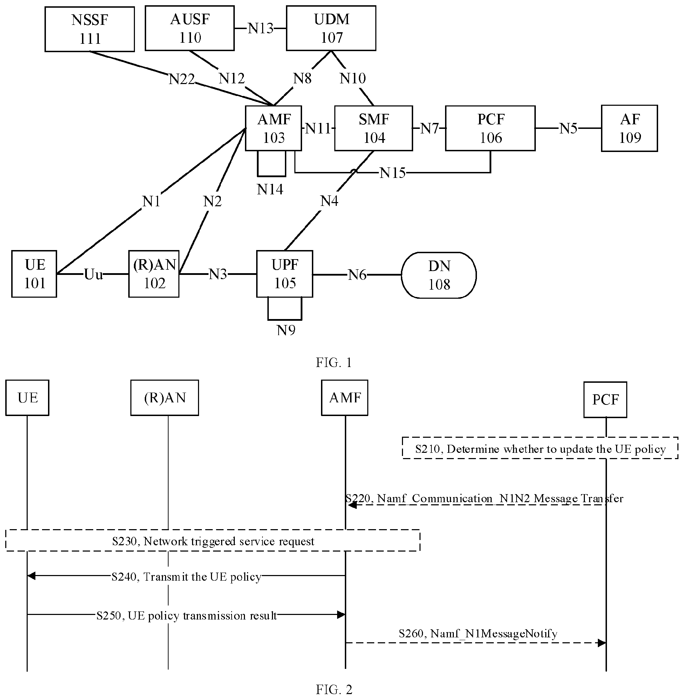

FIG. 1 is a schematic diagram of a wireless communication system applicable to some embodiments of the present disclosure. As shown in FIG. 1, the fifth-generation (5G) system or new radio (NR) network architecture released by the 3rd generation partnership project (3GPP) standards group includes: a terminal device (also referred to as "user equipment (UE)") 101, an access network device 102 supporting 3GPP technology (including radio access network (RAN) or access network (AN)), a user plane function (UPF) network element 105, an access and mobility management function (AMF) network element 103, a session management function (SMF) network element 104, a policy control function (PCF) network element 106, an application function (AF) network element 109, a data network (DN) 108, a network slice selection function (NSSF) 111, an authentication server function (AUSF) 110, and a unified data management (UDM) 107.

It should be noted that the network architecture shown in FIG. 1 does not constitute a limitation on the 5G network architecture. In specific implementations, the 5G network architecture includes more or fewer network elements than shown in the diagram, or combines certain network elements. In addition, in FIG. 1, AN or RAN is represented as (R)AN.

The terminal device 101 is user equipment (UE), terminals, handheld terminals, laptop computers, subscriber units, cellular phones, smart phones, wireless data cards, personal digital assistant (PDA) computers, tablet computers, wireless modems, handheld devices, laptop computers, cordless phones, wireless local loop (WLL) units, machine type communication (MTC) terminals, handheld devices with wireless communication functionality, computing devices, processing devices connected to wireless modems, drones, vehicle-mounted devices, wearable devices, terminals in the Internet of Things, virtual reality devices, terminal devices in the future communication system (e.g., 6G) network, terminals in the future-evolved public land mobile networks (PLMNs), and the like.

The access network device 102 is the access device via which terminal devices wirelessly access the network architecture. The access network device is used for radio resource management on the air interface side, quality of service (QoS) management, data compression, encryption, and the like. For example, the access network device is base station NodeB, evolved base station eNodeB, base stations in the 5G mobile communication system or new radio (NR) communication system, or base stations in future mobile communication systems.

The UPF network element 105, AMF network element 103, SMF network element 104, and PCF network element 106 are network elements of the 3GPP core network (referred to as core network elements). The UPF network element 105 is referred to as the user plane function network element, and used for the transmission of user data. Other network elements are referred to as control plane function network elements, and used for identification, authentication, registration management, session management, mobility management, policy control, and the like, to ensure the reliable and stable transmission of user data.

The UPF network element 105 (or simply "UPF") is used for forwarding and receiving data from the terminal. For example, the UPF network element receives traffic data from the data network and transmits the data to terminals via access network devices; the UPF network element also receives user data from terminals via access network devices and forwards the data to the data network. The transmission resources allocated and scheduled by the UPF network element for terminals are managed and controlled by the SMF network element. The bearer between terminals and the UPF network element includes the user plane connection between the UPF network element and access network devices, as well as establishing channels between access network devices and terminals. The user plane connection refers to the quality of service (QoS) flow that is established for transmitting data between the UPF network element and the access network device.

The AMF network element 103 (or simply "AMF") is used to manage terminal access to the core network, for example, terminal location updates, network registration, access control, terminal mobility management, terminal attachment and detachment, and the like. The AMF network element also provides the control plane storage resource for the session while providing a service for the session of the terminal, so as to store the session identifier, the SMF network element identifier associated with the session identifier, and the like.

The SMF network element 104 (or simply "SMF") may be used for selecting user plane network elements for terminals, redirecting user plane network elements for terminals, allocating internet protocol (IP) addresses to terminals, establishing bearers (also referred to as sessions) between terminals and UPF network elements, session modification, release, and QoS control.

The PCF network element 106 (or simply "PCF") is used to provide policies to the AMF network element 103 and the SMF network element 104, such as QoS policies, slice selection policies, UE policies, and the like. In some embodiments, the PCF manages the issuance and updating of policies.

The AF network element 109 (or simply "AF") is used to interact with 3GPP core network elements to support the routing of data influenced by applications, access network exposure functions, and interact with the PCF network element for policy control, etc.

The DN 108 provides data services for users, such as IP multi-media service (IMS) networks and the Internet. Within the DN 108, there are various application servers (AS) providing different application traffic, such as operator traffic, internet access, or third-party traffic, among others. AS can implement the function of the AF network element.

The NSSF 111 is used for selecting network slices, supporting functions such as: selecting a set of network slice instances for UE services; determining permissible network slice selection assistance information (NSSAI) and the mapping to the subscribed single-network slice selection assistance information (S-NSSAI) when needed; determining configured NSSAI and the mapping to subscribed S-NSSAI when needed; determining AMF sets that are used for UE queries or determining a list of candidate AMFs based on configuration.

The AUSF 110 is used to receive identity verification requests for terminals from the AMF 103, request keys from UDM 107, and then forward the issued keys to the AMF 103 for authentication processing.

The UDM 107 includes functions such as generating and storing user subscription data and managing authentication data, supporting interaction with external third-party servers.

It should be understood that the network elements in FIG. 1 are either network components in hardware devices, software functions running on dedicated hardware, or virtualized functions instantiated on platforms (e.g., a cloud platform). It should be noted that in the network architecture illustrated in the above figure, the depicted elements are merely exemplary of the network elements included in the entire network architecture. In the embodiments of the present disclosure, the network elements included in the entire network architecture are not limited.

As introduced above, the network elements related to UE policies in the aforementioned communication system include the PCF, AMF, and the like. The following describes the UE policy configuration process applicable to some embodiments of the present disclosure with reference to FIG. 2.

### UE Policy Configuration Process

FIG. 2 is a flowchart of a UE policy configuration process applicable to some embodiments of the present disclosure. The method shown in FIG. 2 includes steps S210 to S260.

In step S210, the PCF determines whether to update the UE policy.

It should be noted that in the case that the PCF does not need to update the UE policy, step S210 is not included in the process shown in FIG. 2. In the case that the PCF determines to update the UE policy, step S210 is included in the process shown in FIG. 2. In addition, in the case that the PCF determines to update the UE policy, the process shown in FIG. 2 is also referred to as the "UE configuration update (UCU)" process.

In step S220, the PCF transmits a communication service request to the AMF.

In some embodiments, the communication service request carries a container that includes relevant information about the UE policy, such as the content of the UE policy or the UE policy identifier.

The communication service request is transmitted over N1 and N2 messages. Therefore, the communication service request is also represented as "Namf_Communication_N1N2 Message Transfer".

In step S230, the network side triggers a service request, such that the network communicates with the UE.

In step S240, the AMF transmits the UE policy to the UE.

In some embodiments, the UE policy is packaged in a container, and the container is a container transmitted by the PCF to the AMF; accordingly, the AMF directly transmits the container transparently to the UE after receiving the container. The transparent transmission can be understood as the AMF not perceiving or modifying the container.

In some other embodiments, the UE policy or container is transmitted to the UE by the AMF over a NAS message (or a downlink NAS message).

In step S250, the UE transmits the UE policy transmission result to the AMF.

In some embodiments, the UE policy transmission result indicates whether the UE has successfully received the UE policy.

In step S260, the AMF transmits an N1 message notification (denoted as "Namf_N1MessageNotify") to the PCF to inform the PCF of the UE policy transmission result.

In some embodiments, the N1 message notification is referred to as the "manage UE policy complete" message.

It should be noted that steps S220 and S260 include two messages, namely the request and the response to the request. The method shown in FIG. 2 only illustrates the requests of two steps and does not illustrate the responses to the two requests.

In addition, as previously mentioned, the PCF transmits a container to the UE to transmit the UE policy. Conversely, the UE also transmits a container to the PCF via a container. In this case, the container is transmitted by the UE to the AMF over a NAS message (or an uplink NAS message) and then transparently transmitted by the AMF to the PCF.

In the process shown in FIG. 2, to transmit the UE policy, the reason value of the "UE policy container" is introduced in the downlink NAS and uplink NAS messages. For example, the UE policy container reason value is added to the payload container. Accordingly, after acquiring the UE policy container reason value, the AMF performs the transparent transmission function to transparently transmit the container to the UE or the PCF.

### UE Policy

The UE policy includes the UE route selection policy (URSP) and the access network discovery and selection policy (ANDSP), among others. The following introduces URSP as an example.

URSP indicates the binding relationship between application data and PDU sessions. In addition, URSP indicates what kind of PDU session the UE needs to establish to transmit application data. Typically, URSP includes one or more URSP rules. URSP rules are described below with reference to Table 1.

**Table 1: Structure of URSP Rules**

| **Information name** | **Description** | **Types** | **Allowed to modify PCF in UE context** | **Scope** |
|---|---|---|---|---|
| Rule precedence | Determine the order of executing URSP rules in the UE | Required | Yes | UE context |
| Traffic descriptor | This part defines the components of the traffic descriptor in URSP rules | Required | | |
| Application descriptor | It consists of OSId and OSAppId | Optionally | Yes | UE context |
| IP descriptor | Target IP 3-tuple (IP address or IPv6 network prefix, port number, protocol ID of protocols above IP) | Optionally | Yes | UE context |
| Domain descriptor | Target fully qualified domain name (FQDN) | Optionally | Yes | UE context |
| Non-IP descriptor | Descriptor of non-IP communication target information | Optionally | Yes | UE context |
| DNN | This matches the DNN information provided by the application | Optionally | Yes | UE context |
| Connection Capabilities | This matches the information provided by the UE application when requesting a network connection with specific capabilities | Optionally | Yes | UE context |
| Routing selection descriptor list | List of RSDs, see Table 2 for RSD components | Required | | |

As shown in Table 1, URSP rules include at least one of the following information: the rule precedence, the traffic descriptor (TD), the application descriptors, IP descriptors, the domain descriptors, non-IP descriptors, the data network name (DNN), the connection capabilities, or the route selection descriptor (RSD) list.

It should be noted that each URSP rule in URSP has a different rule precedence. In other words, different URSP rules in URSP correspond to different rule precedences.

Typically, in the case that the characteristics of application data are matched with the traffic descriptor in a URSP rule, the PDU session established based on the RSD in the URSP rule is used to transmit the application data, i.e., the binding of application data and PDU session introduced above. The RSD list in URSP rules is described below with reference to Table 2. Typically, the RSD list includes one or more RSDs.

**Table 2: Structure of RSD**

| **Information name** | **Description** | **Types** | **Allowed to modify PCF in UE context** | **Scope** |
|---|---|---|---|---|
| RSD precedence | Used to determine the order of using RSDs | Required | Yes | UE context |
| Route selection components | This part defines the route selection components | Required | | |
| SSC mode selection | Single value of SSC mode | Optionally | Yes | UE context |
| Network slice selection | Single value or S-NSSAI list | Optionally | Yes | UE context |
| DNN selection | Single value or DNN list | Optionally | Yes | UE context |
| PDU session type selection | Single value of PDU session type | Optionally | Yes | UE context |
| Non-seamless offload indication | Indicate whether to offload the communication of the matching application to non-3GPP access outside the PDU session | Optionally | Yes | UE context |
| Access type preference | Indicate the preferred access type (3GPP or non-3GPP or multiple access) in the case that the UE establishes a PDU session for the matching application | Optionally | Yes | UE context |
| Route selection validation criteria | This part defines the route validation criteria components | Optionally | | |
| Time window | A time window that allows matching traffic, in the case that the current time is not within the time window, the RSD is considered invalid | Optionally | Yes | UE context |
| Location criteria | A UE location that allows matching traffic, in the case that the UE location does not match the location criteria, the RSD is considered invalid | Optionally | Yes | UE context |

As shown in Table 2, RSD includes at least one of: the route selection descriptor (RSD) precedence, the route selection components, the session and service continuity mode selection (SSC mode selection), the network slice selection, the DNN selection, the PDU session type selection, the non-seamless offload indication, the access type preference, the route selection validation criteria, the time window, or the location criteria.

It should be noted that each piece of information in one RSD is a single value or contains multiple values. For example, the values of S-NSSAI and DNN are one or more. Therefore, each RSD corresponds to one or more parameter combinations, with each parameter combination representing a set of PDU session characteristics. The traffic data corresponding to the traffic descriptor is transmitted in the PDU session corresponding to a parameter value combination of the RSD. In the case that an application data flow described by the traffic descriptor appears, the UE selects a parameter combination according to the corresponding RSD and initiates a PDU session establishment request.

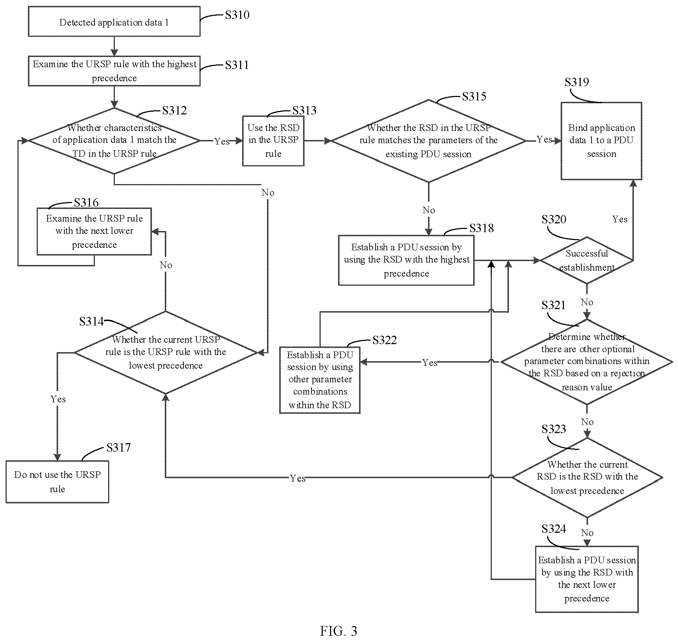

The following uses the URSP rules shown in Table 1 and Table 2 as an example, in conjunction with FIG. 3, to introduce a method for a UE to bind a PDU session for application data 1. The method shown in FIG. 3 includes steps S310 to S324.

In step S310, the UE detects application data 1.

Referring to Table 1, the traffic descriptor in the URSP rules is used to describe the characteristics of a type of application data. Typically, in the case that the characteristics of the application data 1 are matched with the traffic descriptor, the URSP rule containing the traffic descriptor matches the application data 1. In other words, the UE uses the URSP rule when transmitting the application data 1. Conversely, in the case that the characteristics of the application data 1 do not match the traffic descriptor, the URSP rule containing the traffic descriptor does not match the application data 1. In other words, the UE cannot use the URSP rule when transmitting the application data 1.

Taking the application data of Weibo as an example, suppose that the IP address range of Weibo's application server is IP@1~9, and therefore, the traffic descriptor configured with the range of IP@1~9 and the corresponding RSD in the URSP rule is used for data transmission of Weibo traffic. In the case that the UE has application data to transmit and the destination IP address of the IP data packet carrying the application data falls within the IP@1-9 range, it is considered that the application data matches the traffic descriptor of Weibo. The UE binds the matching application data packet to the corresponding PDU session for transmission according to the RSD in the URSP rule corresponding to the traffic descriptor.

Taking IMS traffic as an example, the traffic descriptor that matches the application data of IMS is IMS DNN. In other words, the URSP rule with the traffic descriptor being IMS DNN can use the PDU session corresponding to its RSD to transmit IMS application data.

In step S311, the UE examines the URSP rule with the highest rule precedence in the URSP.

In the case that there is data in the application layer (or in the case that the UE detects new application data), the UE uses the URSP rules in the URSP to check whether the characteristics of the application data match any traffic descriptor in a URSP rule. In some embodiments, the order in which the UE checks is determined according to the rule precedence of the URSP rules, that is, the UE checks for matches in descending order of the rule precedence. In the case that a URSP rule is matched, the RSD list under the URSP rule is used for PDU session binding. Therefore, in step S311, the examination usually starts with the URSP rule with the rule precedence.

In step S312, the UE determines whether the TD in the examined URSP rule matches the characteristics of the application data 1.

In the case that the characteristics of the application data 1 match the TD in the examined URSP rule, step S313 is executed. In the case that the characteristics of the application data 1 do not match the TD in the examined URSP rule, step S314 is executed.

In step S313, the UE determines to use the RSD in the examined URSP rule and then executes step S315.

In step S314, the UE determines whether the examined URSP rule (or the current URSP rule) is the URSP rule with the lowest rule precedence in the URSP.

In the case that the examined URSP rule is not the URSP rule with the lowest rule precedence, the UE executes step S316. In the case that the examined URSP rule is the URSP rule with the lowest rule precedence, the UE executes step S317.

In step S316, the UE selects the URSP rule with the next lower precedence from the URSP as the examined URSP rule and re-executes step S313.

The URSP rule with the next lower precedence can be understood as the URSP rule with the precedence immediately below the URSP rule with the highest precedence.

In step S317, the UE determines not to use the URSP rule.

In step S315, the UE determines whether the RSD in the examined URSP rule matches the parameters of an already established PDU session.

In the case that the RSD in the examined URSP rule does not match the parameters of the already established PDU session, step S318 is executed. In the case that the RSD in the examined URSP rule does not match the parameters of the already established PDU session, step S319 is executed.

In step S318, the UE establishes a PDU session using the RSD with the highest precedence in the examined URSP rule and executes step S320.

In step S319, the UE binds the application data 1 to the PDU session.

It should be noted that the aforementioned PDU session is either the successfully matched PDU session from step S319 or the successfully established PDU session from step S320.

In step S320, the UE determines whether the PDU session has been successfully established.

In the case that the PDU session is successfully established, the UE executes step S319. Conversely, in the case that the PDU session is not successfully established, the UE executes step S321.

In step S321, the UE determines, based on the rejection reason value, whether there are other optional parameter combinations within the RSD.

In the case that there are other optional parameter combinations within the RSD, step S322 is executed. Conversely, in the case that there are no other optional parameter combinations within the RSD, step S323 is executed.

In step S322, the UE uses other optional parameter combinations within the RSD to establish a PDU session and executes step S320.

In step S323, the UE determines whether the current RSD is the RSD with the lowest precedence.

In the case that the current RSD is not the RSD with the lowest precedence, step S324 is executed. In the case that the current RSD is the RSD with the lowest precedence, step S314 is executed.

In step S324, the UE uses the RSD with the next lower precedence to establish a PDU session and executes step S320.

Based on the process described above in conjunction with FIG. 3, it can be seen that in the case that a URSP rule matches the characteristics of the application data 1, the UE first checks whether a currently established PDU session meets the valid RSD parameters under the matched URSP rule. In the case that there is a PDU session that meets the valid RSD parameters (or in other words, a PDU session is established by using the valid RSD parameters under the matched URSP rule), then the application data 1 can be bound to the PDU session.

Conversely, in the case that no PDU session meets the valid RSD parameters, the UE establishes a PDU session in descending order of the precedence in the valid RSD, or in other words, preferentially use the RSD parameters with high precedence to establish a PDU session. It should be noted that in the case that a parameter in the valid RSD has one or more values, the UE may select one of the values to combine with other parameters to establish a PDU session.

Accordingly, in the case that the PDU session is successfully established, the UE binds the application data 1 to the PDU session for transmission. Conversely, in the case that the PDU session is not successfully established, the UE uses other parameter combinations in the valid RSD, or uses parameter combinations in the RSD with the next lower precedence to attempt to establish the PDU session again.

Typically, the process of finding a suitable PDU session for application data as described above may be referred to as the "evaluation process". Through the evaluation process, a suitable PDU session is found or established for the application data to transmit the application data. In the process described above, the UE only establishes a PDU session based on the RSD when the RSD in the matched URSP rule is a "valid RSD".

In some embodiments, a PDU session meeting the following conditions is referred to as a "valid RSD".

Condition 1: In the case that the RSD contains an S-NSSAI, the S-NSSAI must belong to either the Allowed NSSAI (non-roaming) or the Mapping of Allowed NSSAI (roaming).

Condition 2: In the case that the RSD contains a DNN and the DNN is a local area data network (LADN) DNN, the UE must be within the valid area corresponding to the LADN.

Condition 3: In the case that the RSD contains an access type preference and the access type preference is set to multiple access, the UE must support the access traffic steering, switching, splitting (ATSSS) function.

Condition 4: In the case that the RSD contains the time window and the location criteria, the UE must meet the requirements of the time window and the location criteria when matching the application data.

Conversely, in the case that one or more of the above conditions are not met, it may be considered an invalid RSD. In the process shown in FIG. 3, only valid RSDs are considered, and invalid RSDs are ignored.

### PDU Session Establishment Process

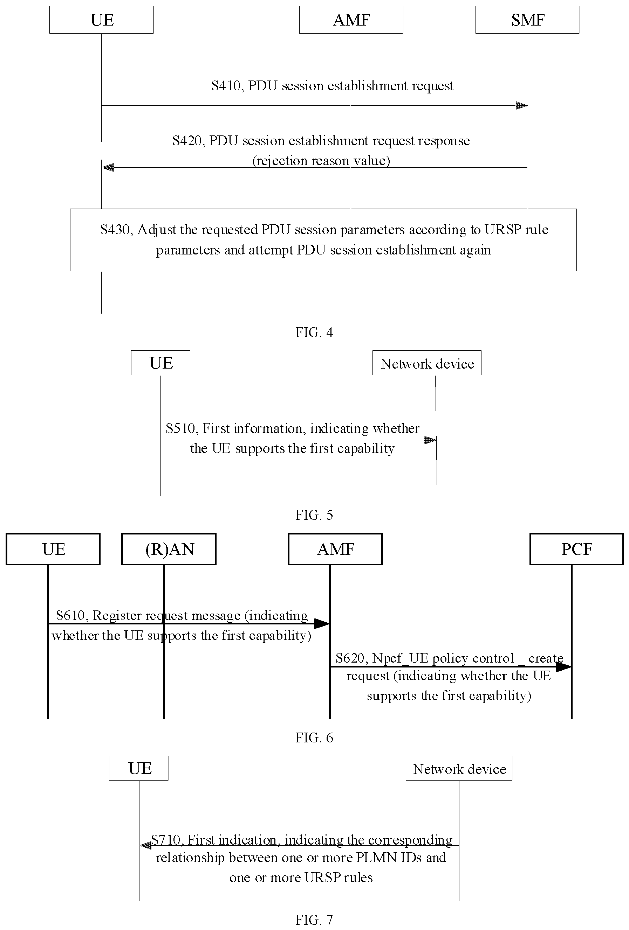

FIG. 4 illustrates a process of establishing a PDU session applicable to some embodiments of the present disclosure. The method shown in FIG. 4 includes steps S410 to S430.

In step S410, the UE transmits a PDU session establishment request to the SMF.

The PDU session establishment request carries PDU session parameters, which include at least one of: the DNN, the S-NSSAI, the PDU session type, the SSC mode, or the PDU session ID.

In step S420, the SMF transmits a PDU session establishment request response to the UE.

The PDU session establishment request response indicates whether the PDU session was successfully established. In some embodiments, in the case that the network side rejects the PDU session establishment request, the establishment request response carries a rejection reason value.

In step S430, in the case that the PDU session establishment request is rejected, the UE adjusts the parameter combination based on the RSD parameters of the URSP rule and re-initiates the PDU session establishment process.

Accordingly, the UE adjusts the parameter combination based on the reason value and the RSD parameters of the URSP rule and re-initiates the PDU session establishment process.

Conventional UE policy rules are uniformly configured by the UE's local PLMN (home PLMN (HPLMN)). In the case that the UE policy rules are successfully configured to the UE, the UE policy rules are applied to various types of PLMNs (e.g., visited PLMN (VPLMN)). However, this solution of applying the UE policy rule to various PLMNs may lead to an inflexible configuration of the UE policy rules. Therefore, to enhance the flexibility of configuring UE policy rules, it is desired that the UE can use different UE policy rules after accessing different PLMNs.

Taking the URSP rules as an example, it might be desired in the future that the VPLMN also participates in the formulation of URSP rules. In some embodiments, the VPLMN independently determines the content of the URSP rules. In some other embodiments, the VPLMN negotiates with the HPLMN to determine the content of the URSP. In such scenarios, the RSD used by the UE under different PLMNs may vary.

Therefore, to determine the PLMN applicable to the RSD, one or more PLMN IDs are added to the RSD in the URSP rules to indicate the PLMN applicable to the RSD. In some embodiments, the aforementioned PLMN ID is added to the verification criteria of the RSD. In some other embodiments, the aforementioned PLMN ID is added as a dedicated parameter in the RSD to limit the PLMN that the UE accesses when using the RSD.

Thus, in the case that the PLMN ID of the PLMN currently registered by the UE (also referred to as the "registered PLMN (RPLMN)") matches the PLMN ID included in the RSD, the RSD is a valid RSD and is applicable to the RPLMN. Conversely, in the case that the PLMN ID of the RPLMN does not match the PLMN ID included in the RSD, the RSD is an invalid RSD and is not applicable to the RPLMN. Accordingly, the UE ignores the RSD.

It should be noted that, for ease of description, the aforementioned "PLMN applicable to the RSD" will be referred to as the "PLMN corresponding to the RSD" hereinafter. In other words, in the case that the RSD corresponds to a PLMN, it can be understood that the RSD is applicable to the PLMN or that the PLMN ID of the PLMN is contained in the restriction conditions (also referred to as "verification criteria") of the RSD.

The aforementioned solution of adding applicable PLMN IDs to the verification criteria of the RSD can largely reuse the existing UE behaviors. In other words, similar to the existing UE behaviors (e.g., UEs supporting R17 or earlier protocols), it can determine whether the corresponding RSD is an invalid RSD or a valid RSD based on the verification criteria in the RSD.

As described above, to indicate UE policy rules applicable to different PLMNs, the network device indicates the PLMN IDs corresponding to different UE policy rules when configuring UE policy rules for the UE. However, some legacy UEs (e.g., UEs supporting R17 or earlier protocols) may only support the configuration of UE policy rules with the HPLMN. In other words, the UE will not report an error in the case that the UE policy rule only includes the PLMN ID of the local PLMN. The UE will report an error in the case that the UE policy rule includes PLMN IDs of other PLMNs (e.g., VPLMNs) besides the HPLMN. Therefore, if UE policy rules with PLMN IDs of other PLMNs are directly delivered, such UEs may no longer be able to use the UE policy rules.

Therefore, to improve the success rate of using UE policy rules, the embodiments of the present disclosure provide a method for wireless communication. The method according to some embodiments of the present disclosure is described below with reference to FIG. 5. The method shown in FIG. 5 includes step S510.

In step S510, the UE transmits the first information to the network device.

The first information indicates whether the UE supports the first capability, and the first capability includes at least one of: receiving a UE policy rule corresponding to a non-HPLMN; or receiving UE policy rules corresponding to a plurality of PLMNs.

In the case that the first capability includes receiving a UE policy rule corresponding to a non-HPLMN, where the HPLMN is also referred to as "home PLMN". Typically, the mobile country code (MCC) and mobile network code (MNC) contained in the international mobile subscriber identity (IMSI) number on the UE's universal subscriber identity module (USIM) card are consistent with the MCC and MNC on the HPLMN. In some cases, for a particular UE, there is only one home PLMN.

Accordingly, the aforementioned non-HPLMN includes other PLMNs besides the HPLMN. For example, the non-HPLMN is a VPLMN. VPLMN is the PLMN that the UE visited. The MCC and MNC of the VPLMN are not completely the same as the MCC and MNC of the UE's IMSI. Typically, in the case that the UE loses coverage, the UE selects a VPLMN to access.

In the case that the first capability includes receiving UE policy rules corresponding to a plurality of PLMNs, the plurality of PLMNs include HPLMN and/or non-HPLMN.

In some embodiments, the UE implicitly indicates whether the first capability is supported over the first information. In other words, the UE indicates whether the first capability is supported by the action of "transmitting the first information". For example, in the case that the UE transmits the first information, it can be understood that the UE supports the first capability. Conversely, in the case that the UE does not transmit the first information, it can be understood that the UE does not support the first capability.

In some other embodiments, the UE explicitly indicates whether the first capability is supported over the first information. In other words, the first information carries an indication (for example, the value of a certain bit in the first information) to indicate whether the UE supports the first capability.

In the embodiments of the present disclosure, the UE transmits the first information to the network device to indicate whether the UE supports the first capability, enabling the network device to configure a UE policy rule for the UE based on the first information. This helps to avoid the situation where the network device directly configures a UE policy rule that is not applicable to the PLMN for the UE, resulting in the UE reporting an error and being unable to use the UE policy rule.

FIG. 6 illustrates a flowchart of a method for wireless communication according to some other embodiments of the present disclosure. Referring to FIG. 6, in some embodiments, the aforementioned network device is a PCF. In this case, the first information is transmitted by the UE to the PCF via the AMF. In some other embodiments, the aforementioned network device is an AMF. Accordingly, after receiving the first information, the AMF forwards the first information to the PCF.

In addition, referring to step S610, in the case that the UE transmits the first information to the AMF, the first information is carried in a register request message. In some cases, the register request message includes a UE policy rule container (UE policy container), and in this case, the first information is carried in the UE policy rule container. Alternatively, in some embodiments of the present disclosure, the first information is signaling transmitted separately, which is not limited in the embodiments of the present disclosure.

Referring to step S620, in the case that the AMF receives the first information from the UE, the AMF transmits the first information to the PCF. In some embodiments, the first information is carried in a UE policy rule control create request (also referred to as "Npcf_UE policy control create request"). In some cases, the UE policy rule control create request includes a UE policy rule container, and in this case, the first information is carried in the UE policy rule container. Alternatively, in some embodiments of the present disclosure, the first information is signaling transmitted separately, which is not limited in the embodiments of the present disclosure.

As described above, currently, in the case of configuring URSP for the UE, to indicate the RSD applicable to different PLMNs, the PLMN ID of the applicable PLMN is added to the RSD. However, a URSP policy usually includes multiple URSP rules, and each URSP rule includes multiple RSDs. According to the method of adding the applicable PLMN ID to the RSD to indicate the corresponding relationship between the RSD and the PLMN ID, the UE needs to traverse all the RSDs to know which RSDs are used by a certain PLMN, leading to more complex operations for the UE.

Therefore, to reduce the complexity of the UE's operations, the embodiments of the present disclosure further provide a method for wireless communication. The process of the method for wireless communication according to some other embodiments of the present disclosure is described below with reference to FIG. 7. The method shown in FIG. 7 includes step S710.

In step S710, the network device transmits a first indication to the UE.

The first indication indicates the corresponding relationship between one or more PLMN IDs and one or more UE policy rules (e.g., URSP rules). In the case that there is a corresponding relationship between the PLMN ID and the UE policy rule, it can be understood that the UE policy rule is applicable to the PLMN indicated by the PLMN ID. Conversely, in the case that there is no corresponding relationship between the PLMN ID and the UE policy rule, it can be understood that the UE policy rule is not applicable to the PLMN indicated by the PLMN ID.

In some embodiments of the present disclosure, the UE policy rule is the URSP rule. In this way, the UE determines the corresponding relationship between the PLMN ID and the URSP rule over the first indication, preventing the UE from traversing all the RSDs in the URSP rule to know the corresponding relationship between the RSD and the PLMN ID, thereby reducing the complexity of the UE's operations.

In some embodiments, the first indication is carried in the URSP containing the URSP rule. In this way, during the process of configuring URSP for the terminal device, the network device can also transmit the first indication to the UE simultaneously. Alternatively, in some embodiments of the present disclosure, the first indication is transmitted as a separate signaling.

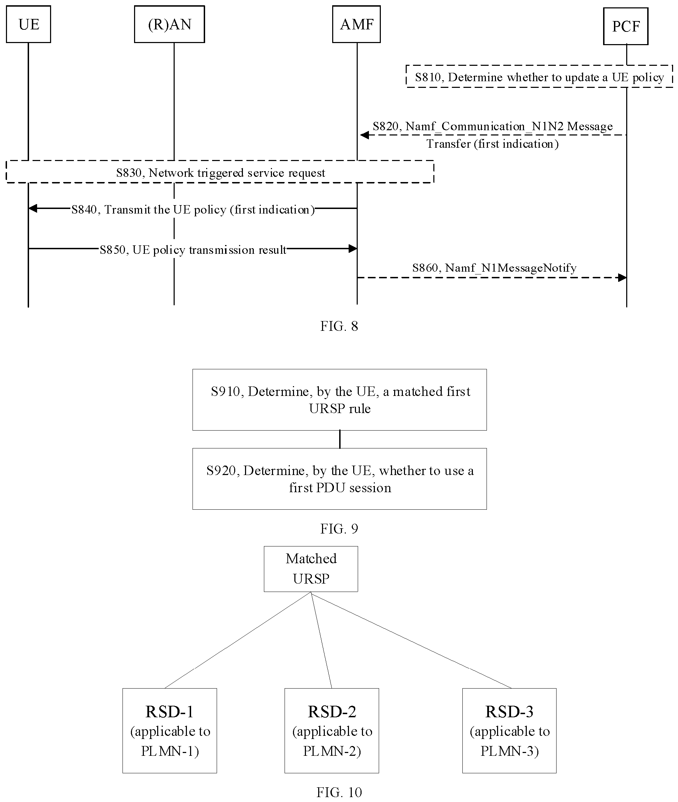

The method for wireless communication according to some embodiments of the present disclosure is described below with reference to FIG. 8, with the first indication carried in the URSP as an example. The method shown in FIG. 8 includes steps S810 to S860. It should be noted that the signaling transmission process shown in FIG. 8 is similar to the signaling transmission process described in FIG. 2, with the difference being that in the method shown in FIG. 8, the UE policy container carries the first indication. For brevity, the parts of FIG. 8 that are similar to FIG. 2 will not be repeated.

In step S810, the PCF determines whether to update the UE policy.

In step S820, the PCF transmits a communication service request to the AMF.

In some embodiments, the communication service request carries a UE policy container, and the UE policy container includes the first indication.

The communication service request is transmitted over N1 and N2 messages. Therefore, the communication service request is also represented as "Namf_Communication_N1N2 Message Transfer".

In step S830, the network side triggers a service request, such that the network communicates with the UE.

In step S840, the AMF transmits the UE policy to the UE.

In some embodiments, the UE policy is packaged in a UE policy container, and the UE policy container is a UE policy container transmitted by the PCF to the AMF; accordingly, the AMF directly transmits the UE policy container transparently to the UE after receiving the UE policy container. The UE policy container carries the first indication.

In step S850, the UE transmits the UE policy transmission result to the AMF.

In step S860, the AMF transmits an N1 message notification to the PCF to inform the PCF of the UE policy transmission result.

It should be noted that in some embodiments of the present disclosure, the method for transmitting the first information (for example, the methods shown in FIGs. 5 and 6) and the method for transmitting the first indication (for example, the methods shown in FIGs. 7 and 8) can be used in combination or independently, which is not limited in the embodiments of the present disclosure.

In the case that the above two methods are used in combination, the UE first transmits the first information to the network device, and accordingly, the network device determines whether to transmit the first indication to the UE based on the first information. That is, step S710 includes: in the case that the first information indicates that the UE supports the first capability, the network device transmits the first indication to the UE; and in the case that the first information indicates that the UE does not support the first capability, the network device does not transmit the first indication to the UE.

In the case that the network device does not transmit the first indication to the UE, the network device configures a URSP corresponding to the HPLMN for the UE. Alternatively, in some embodiments of the present disclosure, in the case that the network device does not transmit the first indication to the UE, the network device does not configure the URSP for the UE, which is not limited in the embodiments of the present disclosure.

As described above, the method for transmitting the first information is also used independently; in the case that the first information indicates that the UE supports the first capability, the network device configures a conventional URSP for the UE, that is, the PLMN ID corresponding to the RSD in the URSP is carried in the RSD. In the case that the first information indicates that the UE does not support the first capability, the network device does not transmit the conventional URSP to the UE.

As described above, PLMNs are divided into various types of PLMNs, including registered PLMNs (RPLMNs) and equivalent PLMNs (EPLMNs) in addition to the HPLMNs and VPLMNs introduced above. The registered PLMN can be understood as the PLMN that the UE registered with before the last shutdown or disconnection from the network. The equivalent PLMN can be understood as a PLMN that holds the same status as the registered PLMN, with the same precedence.

For the matched URSP rule (hereinafter also referred to as the "first URSP rule"), the RSD applicable to the equivalent PLMN and the RSD applicable to the registered PLMN are contained in the URSP rule; in the case that the UE accesses the registered PLMN, a PDU session (hereinafter also referred to as the "first PDU session") established by using the RSD of the equivalent PLMN may exist between the UE and the network device. Currently, the protocol does not specify whether the UE can use the first PDU session in the above scenarios, which may result in discrepancies in understanding for the UE and the network device and thus failure to perform communication.

To avoid the above problems, a method for wireless communication is further provided in the embodiments of the present disclosure to unify the understanding for the UE and the network device, which is beneficial to normal communication between the UE and the network device. The process of the method for wireless communication according to some embodiments of the present disclosure is described below with reference to FIG. 9. The method for wireless communication shown in FIG. 9 includes steps S910 and S920.

In step S910, the UE determines a matched first URSP rule.

The first URSP rule includes the first RSD, the PLMN corresponding to the first RSD includes the equivalent PLMN of the registered PLMN of the UE, and the first PDU session is established between the UE and the network device using the first RSD.

The matched first URSP rule can be understood as the characteristics of the first data flow (which may be, for example, the data flow of the application data described above) matching the TD in the first URSP rule.

The PLMN corresponding to the first RSD includes an equivalent PLMN, which can be understood as the first RSD being applicable to the equivalent PLMN or the PLMN ID included in the first RSD being the PLMN ID of the equivalent PLMN. The manner in which the PLMN ID is carried in the first RSD has been described above, which are not repeated here for brevity.

In step S920, the UE determines whether to use the first PDU session.

In some embodiments, S920 is understood as the UE determining whether to use the first PDU session to transmit the data flow of the first traffic.

In some embodiments of the present disclosure, the UE determines to use the first PDU session, and accordingly, the network device also determines to use the first PDU session, which is beneficial to unifying the understanding for the UE and the network device, thereby improving the success rate of communication between the UE and the network device.

On the other hand, in the case that the UE determines not to use the first PDU session, accordingly, the network device also determines not to use the first PDU session, which is beneficial to unifying the understanding for the UE and the network device, thereby improving the success rate of communication between the UE and the network device.

The embodiments of the present disclosure further provide several scenarios for determining the use of the first PDU session and several scenarios for not using the first PDU session, making the use of the first PDU session more reasonable. The following introduces the scenarios in conjunction with the first condition and the second condition, respectively.

Step S910 includes: in the case that the first condition is satisfied, the UE determines to use the first PDU session.

In some embodiments, the first condition is set based on whether the first URSP rule includes an RSD corresponding to the registered PLMN. In some other embodiments, the first condition is set based on whether a PDU session is established between the UE and the network device using an RSD corresponding to the registered PLMN. Several implementation methods for the first condition are described below.

In implementation method 1 for the first condition, the first condition includes that the first URSP rule does not include the RSD corresponding to the registered PLMN.

In other words, the first URSP rule does not include the RSD corresponding to the registered PLMN, and the PDU session (i.e., the aforementioned first PDU session) has been established by using the first RSD corresponding to the equivalent PLMN in the first URSP rule; in this case, the UE uses the first PDU session to transmit the data flow of the first traffic.

In some embodiments of the present disclosure, in the case that the first condition is satisfied, the UE determines to use the first PDU session to avoid the situation where, after accessing the registered PLMN, the UE cannot use the URSP rule, resulting in the UE being unable to communicate with the network device.

In implementation method 2 for the first condition, the first condition includes that the first URSP rule includes an RSD corresponding to the registered PLMN, and a PDU session is not established between the UE and the network device using the RSD corresponding to the registered PLMN.

In other words, the first URSP rule includes the RSD corresponding to the registered PLMN and the RSD corresponding to the equivalent PLMN, and a PDU session is not established between the UE and the network device using the RSD corresponding to the registered PLMN. However, a PDU session is established between the UE and the network device using the RSD corresponding to the equivalent PLMN, and in this case, the UE uses the first PDU session to transmit the data flow of the first traffic.

In some embodiments of the present disclosure, in the case that the first condition is satisfied, the UE determines to use the first PDU session to avoid the reestablishment of the PDU session based on the RSD corresponding to the PLMN, which is beneficial to saving resources occupied by establishing the PDU session.

In implementation method 3 for the first condition, the first condition includes that the first URSP rule includes an RSD corresponding to the registered PLMN, and a PDU session fails to be established between the UE and the network device using the RSD corresponding to the registered PLMN.

In other words, the first URSP rule includes the RSD corresponding to the registered PLMN and the RSD corresponding to the equivalent PLMN, and the PDU session fails to be established between the UE and the network device using the RSD corresponding to the registered PLMN. However, a PDU session is established between the UE and the network device using the RSD corresponding to the equivalent PLMN, and in this case, the UE may use the first PDU session to transmit the data flow of the first traffic.

In some embodiments of the present disclosure, in the case that the first condition is satisfied, the UE determines to use the first PDU session to avoid the reestablishment of the PDU session based on the RSD corresponding to the PLMN, which is beneficial to saving resources occupied by establishing the PDU session.

Step S910 includes: in the case that the second condition is satisfied, the UE determines not to use the first PDU session.

In some embodiments, the second condition is set based on whether the first URSP rule includes an RSD corresponding to the registered PLMN. In some other embodiments, the second condition is set based on whether a PDU session is established between the UE and the network device using an RSD corresponding to the registered PLMN. Several implementation methods for the second condition are described below.

In implementation method 1 for the second condition, the second condition includes that the first URSP rule includes an RSD corresponding to the registered PLMN.

In other words, the first URSP rule includes the RSD corresponding to the registered PLMN, and the PDU session (i.e., the aforementioned first PDU session) has been established by using the first RSD corresponding to the equivalent PLMN in the first URSP rule; in this case, the UE may not use the first PDU session to transmit the data flow of the first traffic.

In implementation method 2 for the second condition, the second condition includes that the first URSP rule includes an RSD corresponding to the registered PLMN, and a PDU session is not established between the UE and the network device using the RSD corresponding to the registered PLMN.

In other words, the first URSP rule includes the RSD corresponding to the registered PLMN and the RSD corresponding to the equivalent PLMN, and a PDU session is not established between the UE and the network device using the RSD corresponding to the registered PLMN, However, a PDU session is established between the UE and the network device using the RSD corresponding to the equivalent PLMN, and in this case, the UE may not use the first PDU session to transmit the data flow of the first traffic.

In implementation method 3 for the second condition, the second condition includes that the first URSP rule includes an RSD corresponding to the registered PLMN, and a PDU session is established between the UE and the network device using the RSD corresponding to the registered PLMN.

In other words, the first URSP rule includes the RSD corresponding to the registered PLMN and the RSD corresponding to the equivalent PLMN, and a PDU session is established between the UE and the network device using the RSD corresponding to the registered PLMN. In addition, a PDU session is established between the UE and the network device using the RSD corresponding to the equivalent PLMN, and in this case, the UE may not use the first PDU session to transmit the data flow of the first traffic.

For ease of understanding, the method for wireless communication according to some embodiments of the present disclosure is described below with reference to FIG. 10.

Referring to FIG. 10, assuming that the TD in the URSP matches the first traffic, each URSP rule in the URSP carries RSD-1 to RSD-3, where RSD-1 corresponds to PLMN-1, RSD-2 corresponds to PLMN-2, RSD-3 corresponds to PLMN-3, and the precedence of RSD-1 to RSD-3 is from high to low.

In addition, the registered PLMN of the UE is PLMN-3, and the registration accepts message received by the UE indicates that the equivalent PLMN is PLMN-1, that is, the equivalent PLMN of the registered PLMN (PLMN-3) is PLMN-1. Moreover, PDU session 1 is established between the UE and the network device using RSD-1.

Accordingly, in the case that the first condition is satisfied, the data flow of the first traffic can be bound in PDU session 1 without attempting to establish a new PDU session using other RSDs under the URSP rule.

In the case that the second condition is satisfied, RSD-3 is used to establish PDU session 2, and the data flow of the first traffic is bound to PDU session 2 for transmission.

It should be noted that the network device may also determine whether to use the first PDU based on the same condition, and the determination condition is the same as the determination condition of the UE described above, which is not repeated here for brevity.

A method for wireless communication is further provided in the embodiments of the present disclosure to limit the usage sequence of the RSD corresponding to the equivalent PLMN and the RSD corresponding to the registered PLMN in the process of establishing the PDU session, thereby unifying the understanding for the UE and the network device.

In some embodiments of the present disclosure, the method for wireless communication includes the following two steps: the UE determines a matched first URSP rule, where the first URSP rule includes an RSD corresponding to the registered PLMN of the UE and an RSD corresponding to the equivalent PLMN of the registered PLMN; and
in the case that a PDU session fails to be established by using the RSD corresponding to the registered PLMN, the UE establishes the PDU session with the network device by using the RSD corresponding to the equivalent PLMN.

It should be noted that in the embodiments of the present disclosure and the various embodiments described above, terms with the same function use the same name. Reference can be made to the previous descriptions, which is not repeated here for brevity.

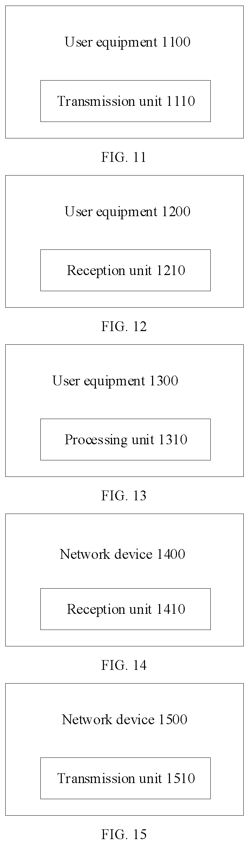

The method embodiments of the present disclosure have been described in detail above with reference to FIGs. 1 to 10, and the apparatus embodiments of the present disclosure will be described in detail below with reference to FIGs. 11 to 17. It should be understood that the description of the method embodiments corresponds to the description of the apparatus embodiments, and therefore reference can be made to the method embodiments above for parts that are not described in detail.

FIG. 11 is a schematic diagram of a user equipment according to some embodiments of the present disclosure, and the UE 1100 shown in FIG. 11 includes a transmission unit 1110.

The transmission unit 1110 is configured to transmit first information to a network device; the first information indicates whether the UE supports a first capability, and the first capability includes at least one of: receiving a UE policy rule corresponding to a non-HPLMN; or receiving UE policy rules corresponding to a plurality of PLMNs.

In some embodiments, in the case that the first information indicates that the UE supports the first capability, a reception unit is configured to receive a first indication from the network device; the first indication indicates the corresponding relationship between one or more PLMN IDs and one or more UE policy rules.

In some embodiments, the first indication is carried in a UE policy containing the UE policy rule.

In some embodiments, the UE policy rule is a UE route selection policy (URSP) rule.

In some embodiments, the network device is a PCF, and the first information is transmitted by the UE to the PCF via an AMF.

In some embodiments, the UE policy rule is transmitted by the UE to the AMF over a register request.

In some embodiments, the UE policy rule is transmitted by the AMF to the PCF over a UE policy control create request.

FIG. 12 is a schematic diagram of a user equipment according to some embodiments of the present disclosure. The user equipment 1200 shown in FIG. 12 includes a reception unit 1210.

The reception unit 1210 is configured to receive a first indication from a network device; the first indication indicates the corresponding relationship between one or more PLMN IDs and one or more UE policy rules.

In some embodiments, the first indication is carried in a UE policy containing the UE policy rule.

In some embodiments, the UE policy rule is a URSP rule.

FIG. 13 is a schematic diagram of a user equipment according to some embodiments of the present disclosure, and the UE 1300 shown in FIG. 13 includes a processing unit 1310.

T processing unit 1310 is configured to determine a matched first URSP rule; the first URSP rule includes a first RSD, a PLMN corresponding to the first RSD includes an equivalent PLMN of a registered PLMN of the UE, and a first PDU session is established between the UE and a network device by using the first RSD.

The processing unit 1310 is further configured to determine whether to use the first PDU session.

In some embodiments, the processing unit is further configured to determine to use the first PDU session in the case that the first condition is satisfied.

In some embodiments, the first condition includes at least one of the following conditions: the first URSP rule does not include an RSD corresponding to the registered PLMN; the first URSP rule includes an RSD corresponding to the registered PLMN, and a PDU session is not established between the UE and the network device using the RSD corresponding to the registered PLMN; or the first URSP rule includes an RSD corresponding to the registered PLMN, and a PDU session fails to be established between the UE and the network device using the RSD corresponding to the registered PLMN.

In some embodiments, the processing unit is further configured to determine not to use the first PDU session in the case that the second condition is satisfied.

In some embodiments, the second condition includes at least one of the following conditions: the first URSP rule includes an RSD corresponding to the registered PLMN; the first URSP rule includes an RSD corresponding to the registered PLMN, and a PDU session is not established between the UE and the network device by using the RSD corresponding to the registered PLMN; or the first URSP rule includes an RSD corresponding to the registered PLMN, and a PDU session is established between the UE and the network device by using the RSD corresponding to the registered PLMN.

In some embodiments, the first URSP rule includes a traffic descriptor (TD), the TD matches a first traffic, and the processing unit is further configured to determine whether to transmit the data flow of the first traffic using the first PDU session.

With continued reference to FIG. 13, the user equipment 1300 shown in FIG. 13 is further configured to perform the following method. That is, the processing unit 1310 is configured to determine a matched first URSP rule; the first URSP rule includes an RSD corresponding to the registered PLMN of the UE and an RSD corresponding to the equivalent PLMN of the registered PLMN. In the case that a PDU session fails to be established by using the RSD corresponding to the registered PLMN, the processing unit 1310 is further configured to establish the PDU session with a network device by using the RSD corresponding to the equivalent PLMN.

FIG. 14 is a schematic diagram of a network device according to some embodiments of the present disclosure. The network device 1400 shown in FIG. 14 includes a reception unit 1410.

The reception unit 1410 is configured to receive first information from a user equipment (UE); the first information indicates whether the UE supports a first capability, and the first capability includes at least one of the following items: receiving a UE policy rule corresponding to a non-HPLMN; or receiving UE policy rules corresponding to a plurality of PLMNs.

In some embodiments, the network device further includes the following unit.

A transmission unit is configured to transmit a first indication to the UE in the case that the first information indicates that the UE supports the first capability. The first indication indicates the corresponding relationship between one or more PLMN IDs and one or more UE policy rules.

In some embodiments, the first indication is carried in a UE policy containing the UE policy rule.

In some embodiments, the UE policy rule is a UE route selection policy (URSP) rule.

In some embodiments, the network device is a PCF, and the first information is transmitted by the UE to the PCF via an AMF.

In some embodiments, the UE policy rule is transmitted by the UE to the AMF over a register request.

In some embodiments, the UE policy rule is transmitted by the AMF to the PCF over a UE policy control create request.

FIG. 15 is a schematic diagram of a network device according to some embodiments of the present disclosure. The network device 1500 shown in FIG. 15 includes a transmission unit 1510.

The transmission unit 1510 is configured to transmit first indication to a user equipment (UE); the first indication indicates the corresponding relationship between one or more PLMN IDs and one or more UE policy rules.

In some embodiments, the first indication is carried in a UE policy containing the UE policy rule.

In some embodiments, the UE policy rule is a URSP rule.

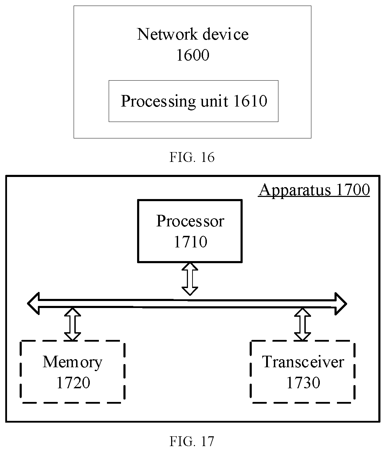

FIG. 16 is a schematic diagram of a network device according to some embodiments of the present disclosure. The network device 1600 shown in FIG. 16 includes a processing unit 1610.

The processing unit 1610 is configured to determine whether to use the first PDU session.

The first PDU session is established using a first RSD, a PLMN corresponding to the first RSD includes an equivalent PLMN of a registered PLMN of the UE, and the first RSD belongs to a matched first URSP rule.

In some embodiments, the processing unit is further configured to determine to use the first PDU session in the case that the first condition is satisfied.

In some embodiments, the first condition includes at least one of the following conditions: the first URSP rule does not include an RSD corresponding to the registered PLMN; the first URSP rule includes an RSD corresponding to the registered PLMN, and a PDU session is not established between the UE and the network device using the RSD corresponding to the registered PLMN; or the first URSP rule includes an RSD corresponding to the registered PLMN, and a PDU session fails to be established between the UE and the network device using the RSD corresponding to the registered PLMN.

In some embodiments, the processing unit is further configured to determine not to use the first PDU session in the case that the second condition is satisfied.

In some embodiments, the second condition includes at least one of the following conditions: the first URSP rule includes an RSD corresponding to the registered PLMN; the first URSP rule includes an RSD corresponding to the registered PLMN, and a PDU session is not established between the UE and the network device using the RSD corresponding to the registered PLMN; or the first URSP rule includes an RSD corresponding to the registered PLMN, and a PDU session is established between the UE and the network device using the RSD corresponding to the registered PLMN.

In some embodiments, the first URSP rule includes a traffic descriptor (TD), the TD matches a first traffic, and the processing unit is further configured to determine whether to transmit the data flow of the first traffic using the first PDU session.

With continued reference to FIG. 16, the network device 1600 shown in FIG. 16 is further configured to perform the following steps. That is, in the case that a PDU session fails to be established by using the RSD corresponding to the registered PLMN of the user equipment (UE), the processing unit 1610 establishes the PDU session with the UE using the RSD corresponding to the equivalent PLMN; the RSD corresponding to the registered PLMN and the RSD corresponding to the equivalent PLMN belong to the matched first URSP rule, and the equivalent PLMN is the equivalent PLMN of the registered PLMN.

FIG. 17 is a schematic structural diagram of a communication apparatus according to some embodiments of the present disclosure. The dashed lines in FIG. 17 indicate that the unit or module is optional. The apparatus 1700 is configured to perform the methods described in the above method embodiments. The apparatus 1700 may be a chip, a UE, or a network device.

The apparatus 1700 includes one or more processors 1710. The processor 1710 supports the apparatus 1700 to perform the methods described in the above method embodiments. The processor 1710 is a general-purpose processor or a specialized processor. For example, the processor is a central processing unit (CPU). Alternatively, the processor is other general-purpose processors, digital signal processors (DSPs), application specific integrated circuits (ASICs), field programmable gate arrays (FPGAs) or other programmable logic devices, discrete gates or transistor logic devices, discrete hardware components, and the like. The general-purpose processor is a microprocessor, or the processor is any conventional processor or the like.

The apparatus 1700 further includes one or more memories 1720. The memory 1720 stores one or more programs thereon, and the one or more programs, when loaded and run by the processor 1710, cause the processor 1710 to perform the methods described in the above method embodiments. The memory 1720 is separate from the processor 1710 or integrated within the processor 1710.

The apparatus 1700 further includes a transceiver 1730. The processor 1710 communicates with other devices or chips via the transceiver 1730. For example, the processor 1710 performs data reception and transmission with other devices or chips via the transceiver 1730.

A computer-readable storage medium is further provided in the embodiments of the present disclosure for storing one or more programs. The computer-readable storage medium is applicable to the terminal or the network device provided in the embodiments of the present disclosure, and the one or more programs, when loaded and run by a computer, cause the computer to perform the methods applicable to the terminal or the network device in the various embodiments of the present disclosure.

A computer program product is further provided in the embodiments of the present disclosure. The computer program product includes one or more programs. The computer program product is applicable to the terminal or the network device provided in the embodiments of the present disclosure, and the one or more programs, when loaded and run by a computer, cause the computer to perform the methods applicable to the terminal or the network device in the various embodiments of the present disclosure.

A computer program is further provided in the embodiments of the present disclosure. The computer program is applicable to the terminal or the network device provided in the embodiments of the present disclosure, and the computer program, when loaded and run by a computer, causes the computer to perform the methods applicable to the terminal or the network device in the various embodiments of the present disclosure.

It should be understood that the terms "system" and "network" may be used interchangeably in the present disclosure. In addition, terms used in the present disclosure are used for explaining the specific embodiments of the present disclosure and are not intended to limit the present disclosure. The terms "first", "second", "third", "fourth", etc. in the specification and claims of the present disclosure and the accompanying drawings are defined to distinguish different objects and are not intended to describe a specific order. Moreover, the terms "include" and "have" and any variations thereof are intended to cover non-exclusive inclusion.

The term "indication" mentioned in the embodiments of the present disclosure may refer to direct indication or indirect indication, or it may signify an associative relationship. For example, "A indicates B" may mean that A indicates B directly, e.g., B may be acquired through A; or that A indicates B indirectly, e.g., A indicates C through which B may be acquired; or that an associative relationship is present between A and B.

In the embodiments of the present disclosure, "B corresponding to A" means that B is associated with A, and B can be determined based on A. It should also be understood that "determining B based on A" does not mean "determining B based solely on A"; B can also be determined based on A and/or other information.

In the embodiments of the present disclosure, the term "correspond" indicates a direct or indirect corresponding relationship between two items, or indicates an associative relationship between the two. It may also refer to relationships such as indicating and being indicated, and configuring and being configured.

In the embodiments of the present disclosure, "predefined" or "preconfigured" can be implemented by prestoring the corresponding codes, tables, or other means for indicating relevant information in the devices (e.g., including UEs and network devices). The present disclosure does not limit the specific implementation methods thereof. For example, "predefined" may refer to being defined in the protocol.

In the embodiments of the present disclosure, the term "protocol" may refer to the standard protocol in the communication field, including, for example, the LTE protocol, the NR protocol, and related protocols applied in future communication systems, which is not limited in the present disclosure.

In the embodiments of the present disclosure, the term "and/or" is merely a way to describe the associative relationship between associated objects, indicating that there are three possible relationships. For example, "A and/or B" may represent: the existence of A alone, the simultaneous existence of A and B, and the existence of B alone. In addition, the character "/" herein generally indicates an "or" relationship between the associated objects before and after the "/".

In the various embodiments of the present disclosure, the numerical order of the above processes does not imply the sequence of execution. The execution order of these processes should be determined by their functions and internal logic, and should not impose any limitation on the implementation of the embodiments of the present disclosure.

In the several embodiments provided in the present disclosure, it should be understood that the disclosed systems, apparatuses, and methods may be implemented in other ways. For example, the above-described apparatus embodiments are merely illustrative. For example, the division of the units is only a logical functional division, and in actual implementation, there may be other division methods. For example, a plurality of units or components may be combined or integrated into another system, or some features may be omitted or not executed. In addition, the coupling, direct coupling, or communication connection between each other that is shown or discussed may be indirect coupling or communication connection through some interfaces, apparatuses, or units, and it may be in electrical, mechanical, or other forms.

The units described as separate parts may or may not be physically separate, and parts displayed as units may or may not be physical units, that is, they may be located in one place or distributed across a plurality of network units. Some or all of the units may be selected according to actual needs to achieve the purpose of the solutions of the embodiments.

In addition, the various functional units in the embodiments of the present disclosure may be integrated into one processing unit, or the various units may physically exist separately, or two or more units may be integrated into one unit.

The above embodiments can be fully or partially implemented through software, hardware, firmware, or any combination thereof. In the case of implementation with software, it can be fully or partially implemented in the form of a computer program product. The computer program product includes one or more computer instructions. The one or more computer program instructions, when loaded and executed on a computer, cause the computer to generate, fully or partially, the processes or functions according to the embodiments of the present disclosure. The computer may be a general-purpose computer, a specialized computer, a computer network, or any other programmable apparatus. The one or more computer instructions are stored in a computer-readable storage medium or transmitted from one computer-readable storage medium to another computer-readable storage medium. For example, the one or more computer instructions are transmitted from one website, computer, server, or data center to another website, computer, server, or data center in a wired (such as coaxial cable, fiber optic, or digital subscriber line (DSL)) or wireless (such as infrared, wireless, or microwave) manner. The computer-readable storage medium may be any available medium accessible by a computer or may be a data storage device such as a server or a data center that includes one or more integrated available media. The available medium may be a magnetic medium (e.g., a floppy disk, hard disk, or magnetic tape), an optical medium (e.g., a digital video disk (DVD)), a semiconductor medium (e.g., a solid state disk (SSD)), and the like.

The above descriptions are only specific embodiments of the present disclosure, but the protection scope of the present disclosure is not limited to these. Any variations or substitutions that can be easily conceived by those skilled in the art within the technical scope disclosed herein should be covered within the protection scope of the present disclosure. Therefore, the protection scope of the present disclosure shall be subject to the protection scope of the claims.

## Claims

1. A method for wireless communication, applicable to a user equipment (UE), the method comprising:
transmitting first information to a network device, wherein the first information indicates whether the UE supports a first capability, the first capability comprising at least one of:
receiving a UE policy rule corresponding to a non-home public land mobile network (HPLMN); or
receiving UE policy rules corresponding to a plurality of public land mobile networks (PLMNs).

2. The method according to claim 1, further comprising:
receiving a first indication from the network device in a case that the first information indicates that the UE supports the first capability, wherein the first indication indicates a corresponding relationship between one or more PLMN identifiers (PLMN IDs) and one or more UE policy rules.

3. The method according to claim 2, wherein the first indication is carried in a UE policy containing the UE policy rule.

4. The method according to any one of claims 1 to 3, wherein the UE policy rule is a UE route selection policy (URSP) rule.

5. The method according to any one of claims 1 to 4, wherein the network device is a policy control function (PCF), and the first information is transmitted by the UE to the PCF via an access and mobility management function (AMF).

6. The method according to claim 5, wherein the UE policy rule is transmitted by the UE to the AMF over a register request.

7. The method according to claim 5 or 6, wherein the UE policy rule is transmitted by the AMF to the PCF over a UE policy control create request.

8. A method for wireless communication, applicable to a user equipment (UE), the method comprising:
receiving a first indication from a network device, wherein the first indication indicates a corresponding relationship between one or more public land mobile network identifiers (PLMN IDs) and one or more UE policy rules.

9. The method according to claim 8, wherein the first indication is carried in a UE policy containing the UE policy rule.

10. The method according to claim 8 or 9, wherein the UE policy rule is a UE route selection policy (URSP) rule.

11. A method for wireless communication, applicable to a user equipment (UE), the method comprising:
determining a matched first UE route selection policy (URSP) rule, wherein the first URSP rule comprises a first route selection descriptor (RSD), a public land mobile network (PLMN) corresponding to the first RSD comprises an equivalent PLMN of a registered PLMN of the UE, and a first packet data unit (PDU) session is established between the UE and a network device using the first RSD; and
determining whether to use the first PDU session.

12. The method according to claim 11, wherein determining whether to use the first PDU session comprises:
determining to use the first PDU session in a case that a first condition is satisfied.

13. The method according to claim 12, wherein the first condition comprises at least one of:
the first URSP rule not comprising an RSD corresponding to the registered PLMN;
the first URSP rule comprising an RSD corresponding to the registered PLMN, and a PDU session not being established between the UE and the network device using the RSD corresponding to the registered PLMN; or
the first URSP rule comprising an RSD corresponding to the registered PLMN, and a PDU session failing to be established between the UE and the network device using the RSD corresponding to the registered PLMN.

14. The method according to claim 11, wherein determining whether to use the first PDU session comprises:
determining not to use the first PDU session in a case that a second condition is satisfied.

15. The method according to claim 14, wherein the second condition comprises at least one of:
the first URSP rule comprising an RSD corresponding to the registered PLMN;
the first URSP rule comprising an RSD corresponding to the registered PLMN, and a PDU session not being established between the UE and the network device using the RSD corresponding to the registered PLMN; or
the first URSP rule comprising an RSD corresponding to the registered PLMN, and a PDU session being established between the UE and the network device using the RSD corresponding to the registered PLMN.

16. The method according to any one of claims 11 to 15, wherein the first URSP rule comprises a traffic descriptor (TD), the TD being matched with a first traffic; and wherein determining whether to use the first PDU session comprises:
determining whether to transmit a data flow of the first traffic using the first PDU.

17. A method for wireless communication, applicable to a user equipment (UE), the method comprising:
determining a matched first UE route selection policy (URSP) rule, wherein the first URSP rule comprises a route selection descriptor (RSD) corresponding to a registered public land mobile network (PLMN) of the UE and an RSD corresponding to an equivalent PLMN of the registered PLMN; and
establishing a packet data unit (PDU) session with a network device using the RSD corresponding to the equivalent PLMN in a case that the PDU session fails to be established using the RSD corresponding to the registered PLMN.

18. A method for wireless communication, applicable to a network device, the method comprising:
receiving first information from a user equipment (UE), wherein the first information indicates whether the UE supports a first capability, the first capability comprising at least one of:
receiving a UE policy rule corresponding to a non-home public land mobile network (HPLMN); or
receiving UE policy rules corresponding to a plurality of public land mobile networks (PLMNs).

19. The method according to claim 18, further comprising:
transmitting a first indication to the UE in a case that the first information indicates that the UE supports the first capability, wherein the first indication indicates a corresponding relationship between one or more PLMN identifiers (PLMN IDs) and one or more UE policy rules.

20. The method according to claim 19, wherein the first indication is carried in a UE policy containing the UE policy rule.

21. The method according to any one of claims 18 to 20, wherein the UE policy rule is a UE route selection policy (URSP) rule.

22. The method according to any one of claims 18 to 21, wherein the network device is a policy control function (PCF), and the first information is transmitted by the UE to the PCF via an access and mobility management function (AMF).

23. The method according to claim 22, wherein the UE policy rule is transmitted by the UE to the AMF over a register request.

24. The method according to claim 22 or 23, wherein the UE policy rule is transmitted by the AMF to the PCF over a UE policy control create request.

25. A method for wireless communication, applicable to a network device, the method comprising:
transmitting a first indication to a user equipment (UE), wherein the first indication indicates a corresponding relationship between one or more public land mobile network identifiers (PLMN IDs) and one or more UE policy rules.

26. The method according to claim 25, wherein the first indication is carried in a UE policy containing the UE policy rule.

27. The method according to claim 25 or 26, wherein the UE policy rule is a UE route selection policy (URSP) rule.

28. A method for wireless communication, applicable to a network device, the method comprising:
determining whether to use a first packet data unit (PDU) session,
wherein the first PDU session is established using a first route selection descriptor (RSD), a public land mobile network (PLMN) corresponding to the first RSD comprises an equivalent PLMN of a registered PLMN of the UE, and the first RSD belongs to a matched first UE route selection policy (URSP) rule.

29. The method according to claim 28, wherein determining whether to use the first PDU session comprises:
determining to use the first PDU session in a case that a first condition is satisfied.

30. The method according to claim 29, wherein the first condition comprises at least one of:
the first URSP rule not comprising an RSD corresponding to the registered PLMN;
the first URSP rule comprising an RSD corresponding to the registered PLMN, and a PDU session not being established between the UE and the network device using the RSD corresponding to the registered PLMN; or
the first URSP rule comprising an RSD corresponding to the registered PLMN, and a PDU session failing to be established between the UE and the network device using the RSD corresponding to the registered PLMN.

31. The method according to claim 28, wherein determining whether to use the first PDU session comprises:
determining not to use the first PDU session in a case that a second condition is satisfied.

32. The method according to claim 31, wherein the second condition comprises at least one of:
the first URSP rule comprising an RSD corresponding to the registered PLMN;
the first URSP rule comprising an RSD corresponding to the registered PLMN, and a PDU session not being established between the UE and the network device using the RSD corresponding to the registered PLMN; or
the first URSP rule comprising an RSD corresponding to the registered PLMN, and a PDU session being established between the UE and the network device using the RSD corresponding to the registered PLMN.

33. The method according to any one of claims 28 to 32, wherein the first URSP rule comprises a traffic descriptor (TD), the TD being matched with a first traffic; and wherein determining whether to use the first PDU session comprises:
determining whether to transmit a data flow of the first traffic using the first PDU session.

34. A method for wireless communication, applicable to a network device, the method comprising:
establishing a packet data unit (PDU) session with a user equipment (UE) using a route selection descriptor (RSD) corresponding to an equivalent public land mobile network (PLMN) in a case that the PDU session fails to be established using an RSD corresponding to a registered PLMN of the UE,
wherein the RSD corresponding to the registered PLMN and the RSD corresponding to the equivalent PLMN belong to a matched first UE route selection policy (URSP) rule, and the equivalent PLMN is an equivalent PLMN of the registered PLMN.

35. A user equipment (UE), comprising:
a transmission unit, configured to transmit first information to a network device, wherein the first information indicates whether the UE supports a first capability, the first capability comprising at least one of:
receiving a UE policy rule corresponding to a non-home public land mobile network (HPLMN); or
receiving UE policy rules corresponding to a plurality of public land mobile networks (PLMNs).

36. The UE according to claim 35, comprising:
a reception unit, configured to receive a first indication from the network device in a case that the first information indicates that the UE supports the first capability, wherein the first indication indicates a corresponding relationship between one or more PLMN identifiers (PLMN IDs) and one or more UE policy rules.

37. The UE according to claim 36, wherein the first indication is carried in a UE policy containing the UE policy rule.

38. The UE according to any one of claims 35 to 37, wherein the UE policy rule is a UE route selection policy (URSP) rule.

39. The UE according to any one of claims 35 to 38, wherein the network device is a policy control function (PCF), and the first information is transmitted by the UE to the PCF via an access and mobility management function (AMF).

40. The UE according to claim 39, wherein the UE policy rule is transmitted by the UE to the AMF over a register request.

41. The UE according to claim 39 or 40, wherein the UE policy rule is transmitted by the AMF to the PCF over a UE policy control create request.

42. A user equipment (UE), comprising:
a reception unit, configured to receive a first indication from a network device, wherein the first indication indicates a corresponding relationship between one or more public land mobile network identifiers (PLMN IDs) and one or more UE policy rules.

43. The UE according to claim 42, wherein the first indication is carried in a UE policy containing the UE policy rule.

44. The UE according to claim 42 or 43, wherein the UE policy rule is a UE route selection policy (URSP) rule.

45. A user equipment (UE), comprising:
a processing unit, configured to determine a matched first UE route selection policy (URSP) rule, wherein the first URSP rule comprises a first route selection descriptor (RSD), a public land mobile network (PLMN) corresponding to the first RSD comprises an equivalent PLMN of a registered PLMN of the UE, and a first packet data unit (PDU) session is established between the UE and a network device using the first RSD; and wherein
the processing unit is further configured to determine whether to use the first PDU session.

46. The UE according to claim 45, wherein the processing unit is further configured to:
determine to use the first PDU session in a case that a first condition is satisfied.

47. The UE according to claim 46, wherein the first condition comprises at least one of:
the first URSP rule not comprising an RSD corresponding to the registered PLMN;
the first URSP rule comprising an RSD corresponding to the registered PLMN, and a PDU session not being established between the UE and the network device using the RSD corresponding to the registered PLMN; or
the first URSP rule comprising an RSD corresponding to the registered PLMN, and a PDU session fails to be established between the UE and the network device using the RSD corresponding to the registered PLMN.

48. The UE according to claim 45, wherein the processing unit is further configured to:
determine not to use the first PDU session in a case that a second condition is satisfied.

49. The UE according to claim 48, wherein the second condition comprises at least one of the following conditions:
the first URSP rule comprising an RSD corresponding to the registered PLMN;
the first URSP rule comprising an RSD corresponding to the registered PLMN, and a PDU session not being established between the UE and the network device using the RSD corresponding to the registered PLMN; or
the first URSP rule comprising an RSD corresponding to the registered PLMN, and a PDU session being established between the UE and the network device using the RSD corresponding to the registered PLMN.

50. The UE according to any one of claims 45 to 49, wherein the first URSP rule comprises a traffic descriptor (TD), the TD being matched with a first traffic; and wherein
the processing unit is further configured to determine whether to transmit a data flow of the first traffic using the first PDU session.

51. A user equipment (UE), comprising:
a processing unit, configured to determine a matched first UE route selection policy (URSP) rule, wherein the first URSP rule comprises a route selection descriptor (RSD) corresponding to a registered public land mobile network (PLMN) of the UE and an RSD corresponding to an equivalent PLMN of the registered PLMN; and wherein
the processing unit is configured to establish a packet data unit (PDU) session with a network device using the RSD corresponding to the equivalent PLMN in a case that the PDU session fails to be established by using the RSD corresponding to the registered PLMN.

52. A network device, comprising:
a reception unit, configured to receive first information from a user equipment (UE), wherein the first information indicates whether the UE supports a first capability, and the first capability comprises at least one of the following items:
receiving a UE policy rule corresponding to a non-home public land mobile network (HPLMN); or
receiving UE policy rules corresponding to a plurality of public land mobile networks (PLMNs).

53. The network device according to claim 52, further comprising:
a transmission unit, configured to transmit a first indication to the UE in a case that the first information indicates that the UE supports the first capability, wherein the first indication indicates a corresponding relationship between one or more PLMN identifiers (PLMN IDs) and one or more UE policy rules.

54. The network device according to claim 53, wherein the first indication is carried in a UE policy containing the UE policy rule.

55. The network device according to any one of claims 52 to 54, wherein the UE policy rule is a UE route selection policy (URSP) rule.

56. The network device according to any one of claims 52 to 55, wherein the network device is a policy control function (PCF), and the first information is transmitted by the UE to the PCF via an access and mobility management function (AMF).

57. The network device according to claim 56, wherein the UE policy rule is transmitted by the UE to the AMF over a register request.

58. The network device according to claim 56 or 57, wherein the UE policy rule is transmitted by the AMF to the PCF over a UE policy control create request.

59. A network device, comprising:
a transmission unit, configured to transmit a first indication to a user equipment (UE), wherein the first indication indicates a corresponding relationship between one or more public land mobile network identifiers (PLMN IDs) and one or more UE policy rules.

60. The network device according to claim 59, wherein the first indication is carried in a UE policy containing the UE policy rule.

61. The network device according to claim 59 or 60, wherein the UE policy rule is a UE route selection policy (URSP) rule.

62. A network device, comprising:
a processing unit, configured to determine whether to use a first packet data unit (PDU) session,
wherein the first PDU session is established using a first route selection descriptor (RSD), a public land mobile network (PLMN) corresponding to the first RSD comprises an equivalent PLMN of a registered PLMN of the UE, and the first RSD belongs to a matched first UE route selection policy (URSP) rule.

63. The network device according to claim 62, wherein the processing unit is further configured to:
determine to use the first PDU session in a case that a first condition is satisfied.

64. The network device according to claim 63, wherein the first condition comprises at least one of:
the first URSP rule not comprising an RSD corresponding to the registered PLMN;
the first URSP rule comprising an RSD corresponding to the registered PLMN, and a PDU session not being established between the UE and the network device using the RSD corresponding to the registered PLMN; or
the first URSP rule comprising an RSD corresponding to the registered PLMN, and a PDU session failing to be established between the UE and the network device using the RSD corresponding to the registered PLMN.

65. The network device according to claim 62, wherein the processing unit is further configured to:
determine not to use the first PDU session in a case that a second condition is satisfied.

66. The network device according to claim 65, wherein the second condition comprises at least one of:
the first URSP rule comprising an RSD corresponding to the registered PLMN;
the first URSP rule comprising an RSD corresponding to the registered PLMN, and a PDU session not being established between the UE and the network device using the RSD corresponding to the registered PLMN; or
the first URSP rule comprising an RSD corresponding to the registered PLMN, and a PDU session being established between the UE and the network device using the RSD corresponding to the registered PLMN.

67. The network device according to any one of claims 62 to 66, wherein the first URSP rule comprises a traffic descriptor (TD), the TD being matched with a first traffic; and wherein the processing unit is further configured to:
determine whether to transmit a data flow of the first traffic using the first PDU session.

68. A network device, comprising:
a processing unit, configured to establish a packet data unit (PDU) session with a user equipment (UE) using a route selection descriptor (RSD) corresponding to an equivalent public land mobile network (PLMN) in a case that the PDU session fails to be established by using an RSD corresponding to a registered PLMN of the UE,
wherein the RSD corresponding to the registered PLMN and the RSD corresponding to the equivalent PLMN belong to a matched first URSP rule, and the equivalent PLMN is an equivalent PLMN of the registered PLMN.

69. A user equipment, comprising a transceiver, a memory configured to store one or more programs, and a processor, wherein the processor, when loading and running the one or more programs in the memory to control the transceiver to transmit and receive signals, causes the user equipment to perform the method as defined in any one of claims 1 to 17.

70. A network device, comprising a memory configured to store one or more programs and a processor, wherein the processor when loading and running the one or more programs in the memory to control the transceiver to transmit and receive signals, causes the network device to perform the method as defined in any one of claims 18 to 34.

71. An apparatus, comprising a processor, wherein the processor, when loading and running one or more programs from a memory, is caused to perform the method as defined in any one of claims 1 to 34.

72. A chip, comprising a processor configured to call one or more programs from a memory, causing a device equipped with the chip to perform the method as defined in any one of claims 1 to 34.

73. A computer-readable storage medium storing one or more programs thereon, wherein the one or more programs, when loaded and run by a computer, cause the computer to perform the method as defined in any one of claims 1 to 34.

74. A computer program product, comprising one or more programs, wherein the one or more programs, when loaded and run by a computer, cause the computer to perform the method as defined in any one of claims 1 to 34.

75. A computer program, wherein the computer program, when loaded and run by a computer, causes the computer to perform the method as defined in any one of claims 1 to 34.
